# EUROPEAN PATENT APPLICATION

(11) **EP 4 804 223 A1**
(43) Date of publication of application: **09.09.2026**
(21) Application number: 23961387.0
(22) Date of filing: 12.12.2023
(51) Int. Cl.: H01G 4/30, H01C 7/02, H01C 7/04, H01C 7/10, H01F 27/29

(54) **MULTILAYER CERAMIC ELECTRONIC COMPONENT**

(71) Applicant: Murata Manufacturing Co., Ltd., Nagaokakyo-shi, Kyoto 617-8555 (JP)
(72) Inventor: ITAMOCHI, Takeshi, Nagaokakyo-shi, Kyoto 617-8555 (JP); OOKAWA, Noriyuki, Nagaokakyo-shi, Kyoto 617-8555 (JP)
(74) Representative: Stöckeler, Ferdinand
(86) International application number: PCT/JP2023/044434
(87) International publication number: WO 2025/126319

(57) **Abstract**

The present invention provides a highly reliable multilayer ceramic electronic component in which it is possible to suppress the occurrence of a crack in a laminate of the multilayer ceramic electronic component. This multilayer ceramic capacitor 1 includes an external electrode 40 which has, from the lower side, a first external electrode 40A that comprises a first base electrode layer 50A, a first organic layer 70A, and a first plating layer 60A, and a second external electrode 40B that comprises a second base electrode layer 50B, a second organic layer 70B, and a second plating layer 60B. In the length direction, the first dimension EL1 of the first base electrode layer is larger than the second dimension EL2 of the second base electrode layer, a part of the first base electrode layer 50A is exposed on the surface of the first organic layer 70A, a part of the second base electrode layer 50B is exposed on the surface of the second organic layer 70B, and the first atomic percentage MR1 of the main component metal of the first base electrode layer 50A on the surface of the first organic layer 70A is larger than the second atomic percentage MR2 of the main component metal of the second base electrode layer 50B on the surface of the second organic layer 70B.

## Description

### TECHNICAL FIELD

The present invention relates to a multilayer ceramic electronic component.

### BACKGROUND ART

In the related art, multilayer ceramic capacitors functioning as multilayer ceramic electronic components have been known. In general, multilayer ceramic capacitors each include a multilayer body in which a plurality of dielectric layers and a plurality of internal electrode layers are alternately laminated, and external electrodes provided on both end surfaces of the multilayer body and connected to the internal electrode layers. For example, Patent Document 1 discloses a multilayer ceramic capacitor having the above-described configuration, in which terminal electrodes functioning as external electrodes each include a metal component and an inorganic bonding material, and a plurality of voids are provided therein.

### Citation List

### Patent Document

Patent Document 1: Japanese Unexamined Patent Application, Publication No. H5-3132

### DISCLOSURE OF THE INVENTION

### Problems to be Solved by the Invention

The multilayer ceramic capacitor disclosed in Patent Document 1 includes terminal electrodes with such voids. Therefore, external stress is relaxed, and the occurrence of cracks in the capacitor is suppressed. This improves the reliability of the multilayer ceramic capacitor. However, in recent years, higher reliability is required, and further measures are sought.

It is an object for the present invention to provide highly reliable multilayer ceramic electronic components that are each able to suppress the occurrence of cracks in the multilayer body of the multilayer ceramic electronic component.

### Means for Solving the Problems

A multilayer ceramic electronic component according to an embodiment of the present invention includes: a multilayer body including a plurality of ceramic layers and a plurality of internal conductive layers that are alternately laminated, and including a first main surface and a second main surface that are opposed to each other in a height direction, a first lateral surface and a second lateral surface that are opposed to each other in a width direction perpendicular to the height direction, and a first end surface and a second end surface that are opposed to each other in a length direction perpendicular to the height direction and the width direction; and external electrodes connected to the plurality of internal conductive layers. The external electrodes include a first external electrode on the first end surface and a second external electrode on the second end surface. The first external electrode includes a first base electrode layer on the first end surface, a first organic layer on the first base electrode layer, and a first plated layer on the first organic layer. The second external electrode includes a second base electrode layer on the second end surface, a second organic layer on the second base electrode layer, and a second plated layer on the second organic layer. The first base electrode layer extends from the first end surface to a portion of the first main surface and a portion of the second main surface. The second base electrode layer extends from the second end surface to a portion of the first main surface and a portion of the second main surface. When a dimension in the length direction from the first end surface of the multilayer body to a terminal end adjacent to the second end surface of the first base electrode layer that extends from the first end surface of the multilayer body to the portion of the first main surface and the portion of the second main surface is defined as a first dimension, and a dimension in the length direction from the second end surface of the multilayer body to a terminal end adjacent to the first end surface of the second base electrode layer that extends from the second end surface of the multilayer body to the portion of the first main surface and the portion of the second main surface is defined as a second dimension, the first dimension is greater than the second dimension. A surface of the first organic layer is provided as a surface with a portion of the first base electrode layer exposed. A surface of the second organic layer is provided as a surface with a portion of the second base electrode layer exposed. When an atomic percentage of a main component metal of the first base electrode layer on the surface of the first organic layer provided adjacent to the first main surface and the second main surface is defined as a first atomic percentage, and an atomic percentage of a main component metal of the second base electrode layer on the surface of the second organic layer provided adjacent to the first main surface and the second main surface is defined as a second atomic percentage, the first atomic percentage is greater than the second atomic percentage.

### Effects of the Invention

According to an embodiment of the present invention, it is possible to provide highly reliable multilayer ceramic electronic components that are each able to suppress the occurrence of cracks in the multilayer body of the multilayer ceramic electronic component.

### BRIEF DESCRIPTION OF THE DRAWINGS

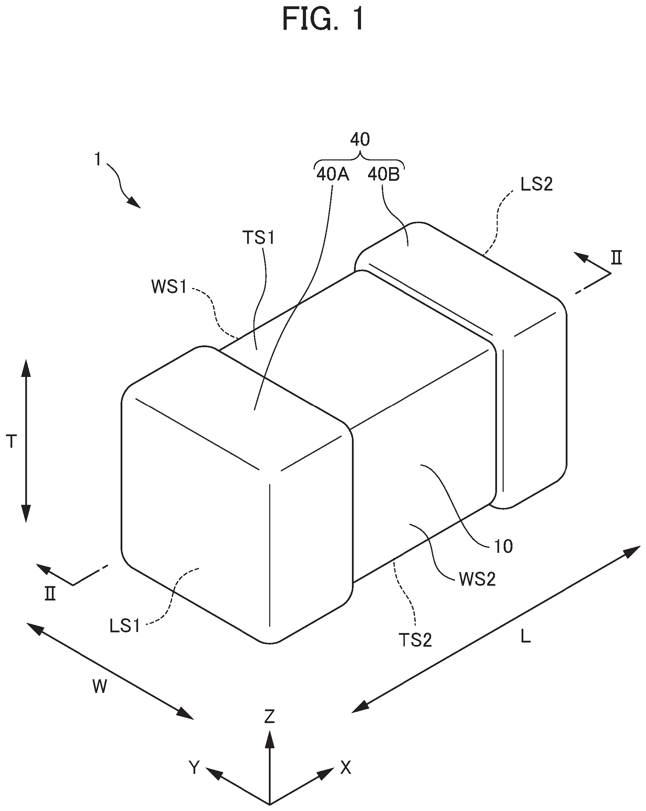

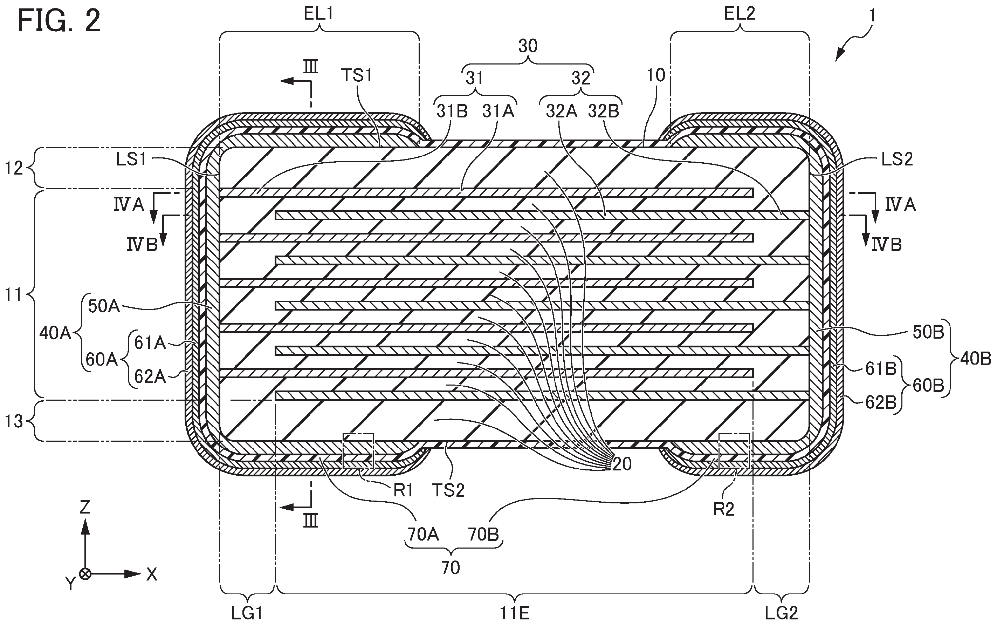

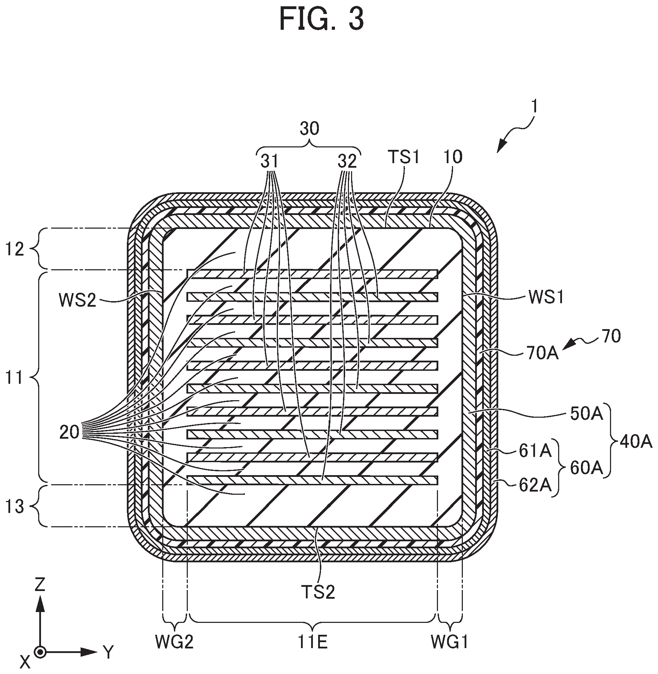

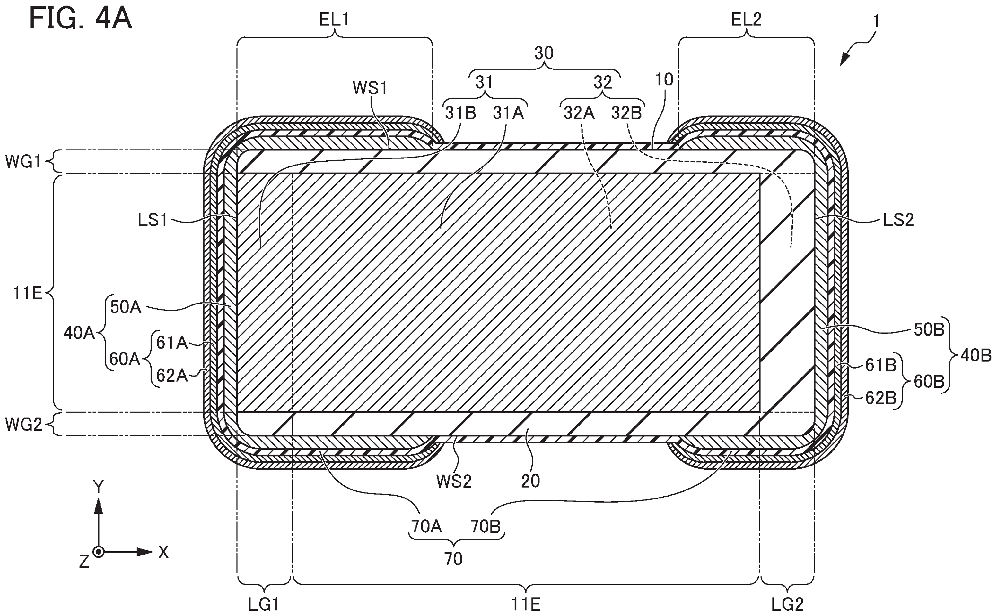

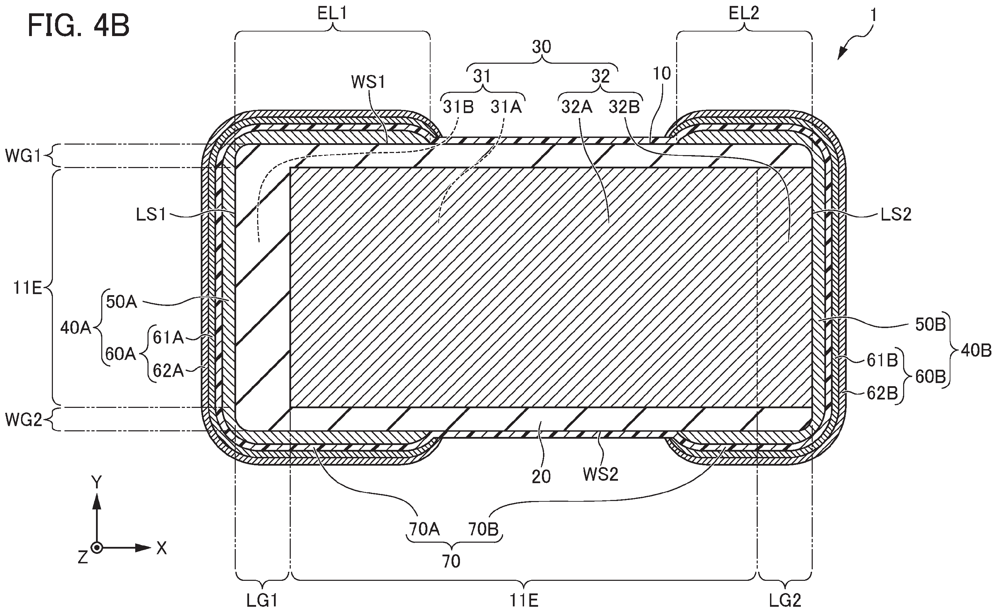

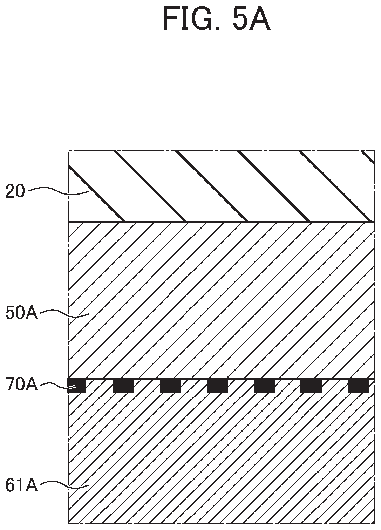

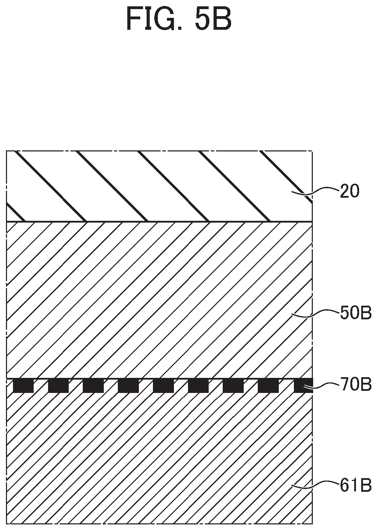

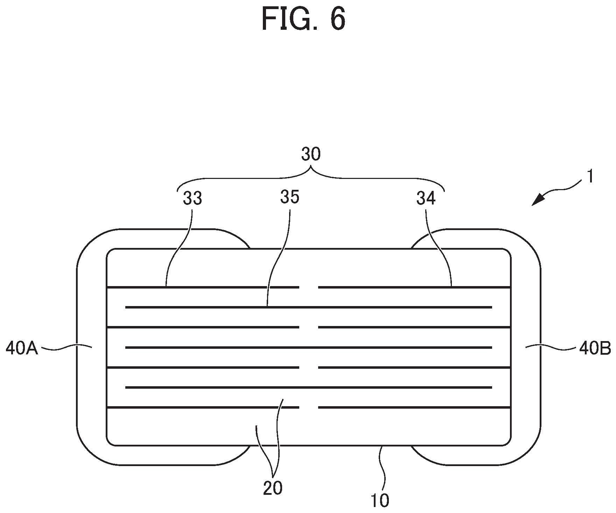

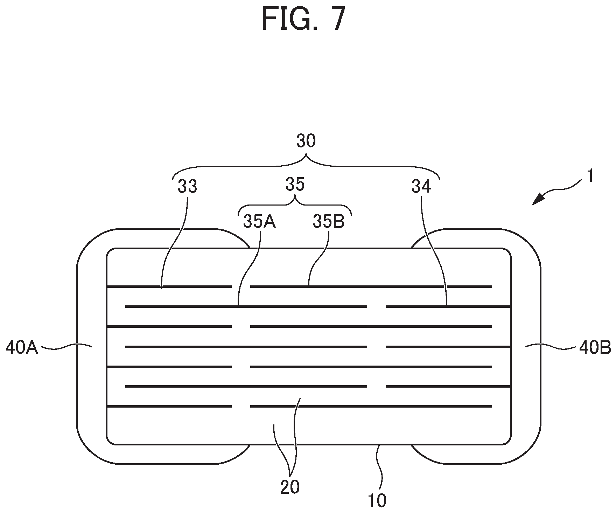

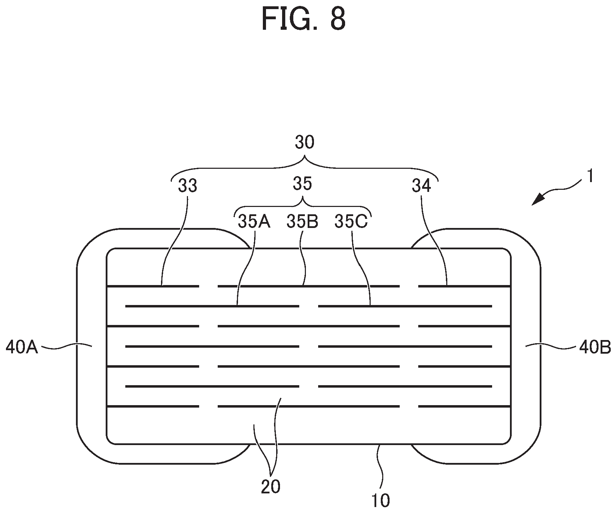

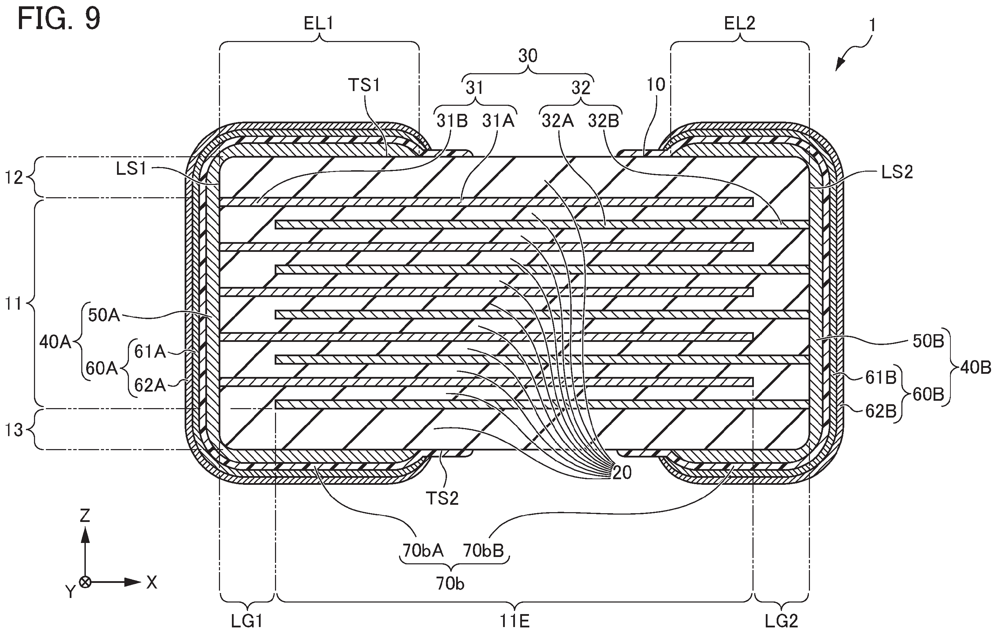

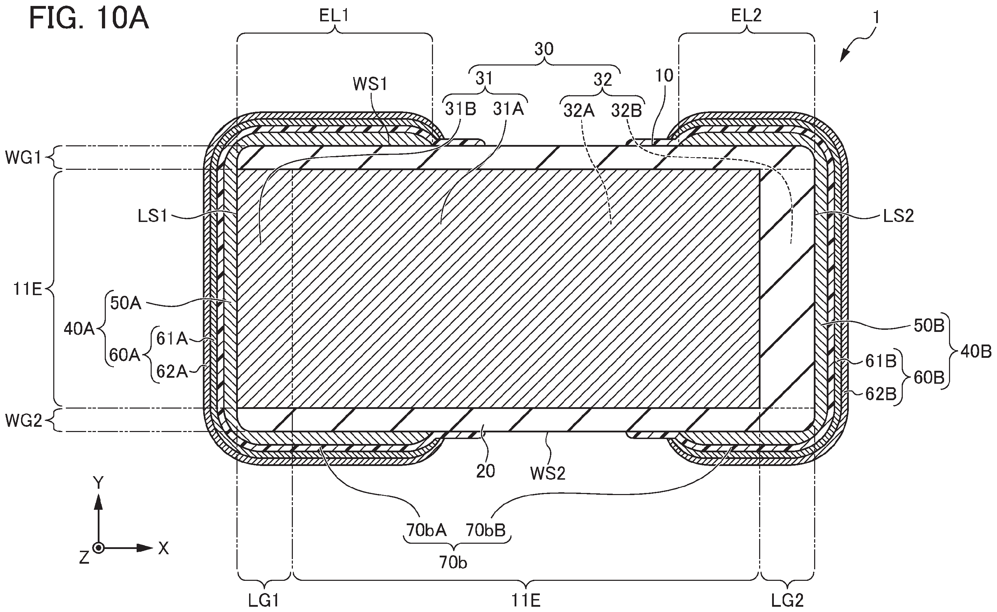

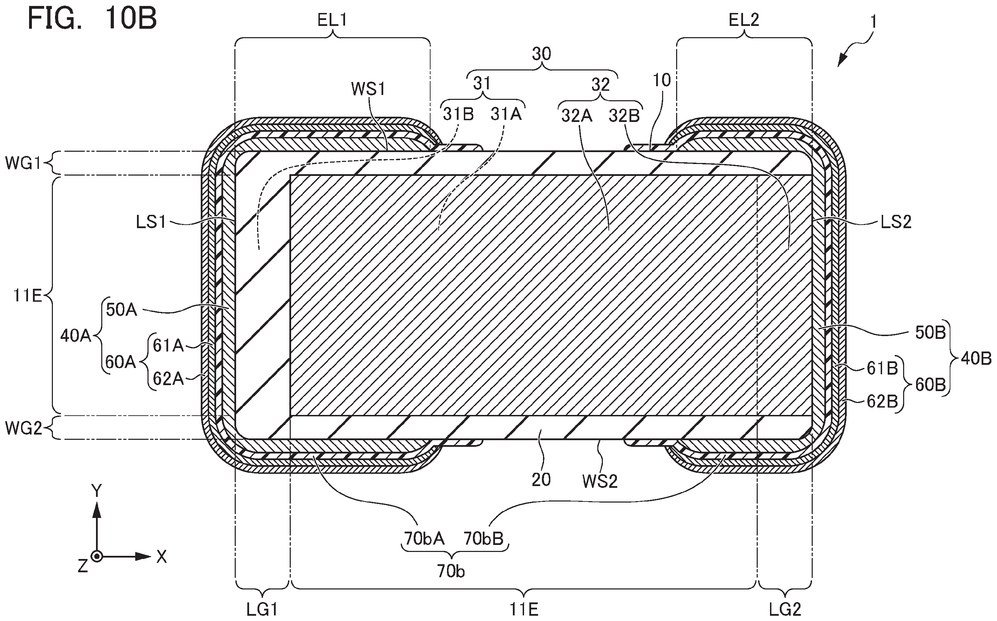

FIG. 1 is an external perspective view of a multilayer ceramic capacitor according to a first embodiment. FIG. 2 is a cross-sectional view taken along the line II-II in FIG. 1. FIG. 3 is a cross-sectional view taken along the line III-III in FIG. 2. FIG. 4A is a cross-sectional view taken along the line IVA-IVA in FIG. 2. FIG. 4B is a cross-sectional view taken along the line IVB-IVB in FIG. 2. FIG. 5A is an enlarged cross-sectional view of a portion indicated by R1 in FIG. 2. FIG. 5B is an enlarged cross-sectional view of a portion indicated by R2 in FIG. 2. FIG. 6 is a diagram showing a multilayer ceramic capacitor having a two-portion configuration. FIG. 7 is a diagram showing a multilayer ceramic capacitor having a three-portion configuration. FIG. 8 is a diagram showing a multilayer ceramic capacitor having a four-portion configuration. FIG. 9 is a cross-sectional view corresponding to FIG. 2 in a second embodiment. FIG. 10A is a cross-sectional view corresponding to FIG. 4A in the second embodiment. FIG. 10B is a cross-sectional view corresponding to FIG. 4B in the second embodiment.

### PREFERRED MODE FOR CARRYING OUT THE INVENTION

### <First Embodiment>

Hereinafter, a multilayer ceramic capacitor 1 functioning as a multilayer ceramic electronic component according to the first embodiment of the present disclosure will be described with reference to FIGS. 1 to 5B. FIG. 1 is an external perspective view of the multilayer ceramic capacitor 1 according to the first embodiment. FIG. 2 is a cross-sectional view taken along the line II-II in FIG. 1. FIG. 3 is a cross-sectional view taken along the line III-III in FIG. 2. FIG. 4A is a cross-sectional view taken along the line IVA-IVA in FIG. 2. FIG. 4B is a cross-sectional view taken along the line IVB-IVB in FIG. 2. FIG. 5A is an enlarged cross-sectional view of a portion indicated by R1 in FIG. 2. FIG. 5B is an enlarged cross-sectional view of a portion indicated by R2 in FIG. 2.

As shown in FIG. 1, the multilayer ceramic capacitor 1 according to the first embodiment has a substantially rectangular parallelepiped shape. The multilayer ceramic capacitor 1 includes a multilayer body 10 having a substantially rectangular parallelepiped shape, and a pair of external electrodes 40 that are provided at both end portions of the multilayer body 10 and spaced apart from each other.

In FIG. 1, an arrow T indicates a height direction of the multilayer ceramic capacitor 1 and the multilayer body 10. The height direction T also refers to a thickness direction and a lamination direction of the multilayer ceramic capacitor 1 and the multilayer body 10. In FIG. 1, an arrow L indicates a length direction of the multilayer ceramic capacitor 1 and the multilayer body 10 orthogonal to the height direction T. In FIG. 1, an arrow W indicates a width direction of the multilayer ceramic capacitor 1 and the multilayer body 10 orthogonal to the height direction T and the length direction L. The pair of external electrodes 40 are provided at one end portion and the other end portion of the multilayer body 10 in the length direction L, respectively.

FIGS. 1 to 4B show an XYZ orthogonal coordinate system. The length direction L of the multilayer ceramic capacitor 1 and the multilayer body 10 corresponds to the X direction. The width direction W of the multilayer ceramic capacitor 1 and the multilayer body 10 corresponds to the Y direction. The height direction T of the multilayer ceramic capacitor 1 and the multilayer body 10 corresponds to the Z direction. Here, the cross section shown in FIG. 2 is also referred to as an LT cross section. The cross section shown in FIG. 3 is also referred to as a WT cross section. The cross sections shown in FIGS. 4A and 4B are also referred to as LW cross sections.

As shown in FIGS. 1 to 4B, the multilayer body 10 includes a first main surface TS1 and a second main surface TS2 opposed to each other in the height direction T, a first end surface LS1 and a second end surface LS2 opposed to each other in the length direction L orthogonal to the height direction T, and a first lateral surface WS1 and a second lateral surface WS2 opposed to each other in the width direction W orthogonal to the height direction T and the length direction L.

As shown in FIG. 1, the multilayer body 10 has a substantially rectangular parallelepiped shape. The dimension of the multilayer body 10 in the length direction L is not necessarily longer than the dimension in the width direction W. The corner portions and ridge portions of the multilayer body 10 are preferably rounded. The corner portions are portions where three surfaces of the multilayer body intersect, and the ridge portions are portions where two surfaces of the multilayer body intersect. In addition, unevenness or the like may be provided on a portion or the entirety of the surface constituting the multilayer body 10.

The dimensions of the multilayer body 10 are not particularly limited; however, when the dimension in the length direction L of the multilayer body 10 is defined as an L dimension, the L dimension is preferably 0.2 mm or more and 10 mm or less. Furthermore, when the dimension in the height direction T of the multilayer body 10 is defined as a T dimension, the T dimension is preferably 0.1 mm or more and 10 mm or less. Furthermore, when the dimension in the width direction W of the multilayer body 10 is defined as a W dimension, the W dimension is preferably 0.1 mm or more and 10 mm or less.

As shown in FIGS. 2 and 3, the multilayer body 10 includes an inner layer portion 11, and a first main surface-side outer layer portion 12 and a second main surface-side outer layer portion 13 that sandwich the inner layer portion 11 in the height direction T.

The inner layer portion 11 includes a plurality of dielectric layers 20 functioning as a plurality of ceramic layers and a plurality of internal electrode layers 30 functioning as a plurality of internal conductive layers which are alternately laminated in the height direction T. In the height direction T, the inner layer portion 11 includes from the internal electrode layer 30 located closest to the first main surface TS1 until the internal electrode layer 30 located closest to the second main surface TS2. In the inner layer portion 11, a plurality of internal electrode layers 30 are opposed to each other with the dielectric layer 20 interposed therebetween. The inner layer portion 11 generates capacitance and substantially functions as a capacitor.

The plurality of dielectric layers 20 is made of a dielectric material. The dielectric material may be, for example, a dielectric ceramic including components such as BaTiO3, CaTiO3, SrTiO3, or CaZrO3. The dielectric material may be obtained by adding a secondary component such as an Mn compound, an Fe compound, a Cr compound, a Co compound, or a Ni compound to these main components. The dielectric material is particularly preferably a material including BaTiO3 as a main component.

The thickness of each of the dielectric layers 20 is preferably 0.5 µm or more and 15 µm or less. The number of the dielectric layers 20 to be laminated is preferably ten or more and 700 or less. The number of the dielectric layers 20 refers to the total number of dielectric layers 20 in the inner layer portion 11, and dielectric layers 20 in each of the first main surface-side outer layer portion 12 and the second main surface-side outer layer portion 13.

The plurality of internal electrode layers 30 includes a plurality of first internal electrode layers 31 functioning as a plurality of first internal conductive layers and a plurality of second internal electrode layers 32 functioning as a plurality of second internal conductive layers. The first internal electrode layers 31 and the second internal electrode layers 32 are alternately provided in the height direction T with the dielectric layers 20 interposed therebetween. The first internal electrode layers 31 each extend toward the first end surface LS1. The second internal electrode layers 32 each extend toward the second end surface LS2. In the following description, when it is not necessary to distinguish between the first internal electrode layer 31 and the second internal electrode layer 32, the first internal electrode layer 31 and the second internal electrode layer 32 may be collectively referred to as an internal electrode layer 30.

As shown in FIG. 4A, each of the first internal electrode layers 31 includes a first counter portion 31A and a first extension portion 31B. The first counter portion 31A is a region opposed to the second internal electrode layer 32 with the dielectric layer 20 interposed therebetween, and is located inside the multilayer body 10. The first extension portion 31B is a portion which extends from the first counter portion 31A toward the first end surface LS1, and is exposed at the first end surface LS1.

As shown in FIG. 4B, the second internal electrode layer 32 includes a second counter portion 32A and a second extension portion 32B. The second counter portion 32A is a region opposed to the first internal electrode layer 31 with the dielectric layer 20 interposed therebetween, and is located inside the multilayer body 10. The second extension portion 32B is a portion extending from the second counter portion 32A toward the second end surface LS2, and is exposed at the second end surface LS2.

In the present embodiment, the first counter portion 31A and the second counter portion 32A are opposed to each other with the dielectric layer 20 interposed therebetween, such that capacitance is generated, and the characteristics of a capacitor are developed.

The shapes of the first counter portion 31A and the second counter portion 32A are not particularly limited; however, they preferably have a rectangular shape. However, the corner portions of the rectangular shape may be rounded, or the corner portions of the rectangular shape may be formed obliquely. The shapes of the first extension portion 31B and the second extension portion 32B are not particularly limited; however, they preferably have a rectangular shape. However, the corner portions of the rectangular shape may be rounded, or the corner portions of the rectangular shape may be formed obliquely.

The dimension in the width direction W of the first counter portion 31A and the dimension in the width direction W of the first extension portion 31B may have the same dimension, or one of them may have a smaller dimension. The dimension in the width direction W of the second counter portion 32A and the dimension in the width direction W of the second extension portion 32B may have the same dimension, or one of them may have a smaller dimension.

The first internal electrode layer 31 and the second internal electrode layer 32 are made of an appropriate electrically conductive material including a metal such as, for example, Ni, Cu, Ag, Pd, and Au, and an alloy including at least one of these metals. When using an alloy, the first internal electrode layer 31 and the second internal electrode layer 32 may be made of, for example, an Ag-Pd alloy or the like.

The thickness of each of the first internal electrode layer 31 and the second internal electrode layer 32 is preferably, for example, 0.2 µm or more and 2.0 µm or less. The total number of the first internal electrode layers 31 and the second internal electrode layers 32 is preferably 10 or more and 700 or less.

As shown in FIGS. 2 and 3, the first main surface-side outer layer portion 12 is located adjacent to the first main surface TS1 of the multilayer body 10. The first main surface-side outer layer portion 12 is an aggregate of a plurality of dielectric layers 20 located between the first main surface TS1 and the internal electrode layer 30 closest to the first main surface TS1. On the other hand, the second main surface-side outer layer portion 13 is located adjacent to the second main surface TS2 of the multilayer body 10. The second main surface-side outer layer portion 13 is an aggregate of a plurality of dielectric layers 20 located between the second main surface TS2 and the internal electrode layer 30 closest to the second main surface TS2. The dielectric layers 20 used in the first main surface-side outer layer portion 12 and the second main surface-side outer layer portion 13 may be the same as the dielectric layers 20 used in the inner layer portion 11.

The multilayer body 10 includes a counter electrode portion 11E. The counter electrode portion 11E refers to a portion where the first counter portion 31A of the first internal electrode layer 31 and the second counter portion 32A of the second internal electrode layer 32 are opposed to each other. The counter electrode portion 11E is configured as a portion of the inner layer portion 11. FIGS. 4A and 4B show the ranges of the counter electrode portion 11E in the width direction W and the length direction L. The counter electrode portion 11E is also referred to as a capacitor effective portion.

The multilayer body 10 includes lateral surface-side outer layer portions. The lateral surface-side outer layer portions include a first lateral surface-side outer layer portion WG1 and a second lateral surface-side outer layer portion WG2. The first lateral surface-side outer layer portion WG1 is a portion including the dielectric layer 20 located between the counter electrode portion 11E and the first lateral surface WS1. The second lateral surface-side outer layer portion WG2 is a portion including the dielectric layer 20 located between the counter electrode portion 11E and the second lateral surface WS2. FIGS. 3, 4A, and 4B each show the ranges of the first lateral surface-side outer layer portion WG1 and the second lateral surface-side outer layer portion WG2 in the width direction W. The lateral surface-side outer layer portions are also each referred to as a W gap or a side gap.

The multilayer body 10 includes end surface-side outer layer portions. The end surface-side outer layer portions include a first end surface-side outer layer portion LG1 and a second end surface-side outer layer portion LG2. The first end surface-side outer layer portion LG1 refers to a portion including the dielectric layer 20 and the first extension portion 31B located between the counter electrode portion 11E and the first end surface LS1. That is, the first end surface-side outer layer portion LG1 is an aggregate of portions of the plurality of dielectric layers 20 adjacent to the first end surface LS1 and the plurality of first extension portions 31B. The second end surface-side outer layer portion LG2 refers to a portion including the dielectric layer 20 and the second extension portion 32B located between the counter electrode portion 11E and the second end surface LS2. That is, the second end surface-side outer layer portion LG2 is an aggregate of portions of the plurality of dielectric layers 20 adjacent to the second end surface LS2 and the plurality of second extension portions 32B. FIGS. 2, 4A, and 4B each show the ranges in the length direction L of the first end surface-side outer layer portion LG1 and the second end surface-side outer layer portion LG2. The end surface-side outer layer portions are also each referred to as an L gap or an end gap.

As shown in FIGS. 1 and 2, the external electrodes 40 include a first external electrode 40A adjacent to the first end surface LS1 of the multilayer body 10, and a second external electrode 40B adjacent to the second end surface LS2 of the multilayer body 10.

In addition, the basic configurations of the first external electrode 40A and the second external electrode 40B are the same. Furthermore, the first external electrode 40A and the second external electrode 40B have a shape that is substantially plane symmetrical with respect to the WT cross section in the middle in the length direction L of the multilayer ceramic capacitor 1. Therefore, in the following description, when it is not necessary to distinguish between the first external electrode 40A and the second external electrode 40B, the first external electrode 40A and the second external electrode 40B may be collectively referred to as an external electrode 40.

The first external electrode 40A is provided on the first end surface LS1. The first external electrode 40A is in contact with the first extension portion 31B of each of the plurality of first internal electrode layers 31 exposed at the first end surface LS1. With such a configuration, the first external electrode 40A is electrically connected to the plurality of first internal electrode layers 31. The first external electrode 40A may be provided on a portion of the first main surface TS1 and a portion of the second main surface TS2, and also on a portion of the first lateral surface WS1 and a portion of the second lateral surface WS2. In the present embodiment, the first external electrode 40A extends from the first end surface LS1 to a portion of the first main surface TS1 and to a portion of the second main surface TS2, and to a portion of the first lateral surface WS1 and to a portion of the second lateral surface WS2.

The second external electrode 40B is provided on the second end surface LS2. The second external electrode 40B is in contact with the second extension portion 32B of each of the plurality of second internal electrode layers 32 exposed at the second end surface LS2. With such a configuration, the second external electrode 40B is electrically connected to the plurality of second internal electrode layers 32. The second external electrode 40B may be provided on a portion of the first main surface TS1 and a portion of the second main surface TS2, and also on a portion of the first lateral surface WS1 and a portion of the second lateral surface WS2. In the present embodiment, the second external electrode 40B extends from the second end surface LS2 to a portion of the first main surface TS1 and to a portion of the second main surface TS2, and to a portion of the first lateral surface WS1 and to a portion of the second lateral surface WS2.

As described above, in the multilayer body 10, capacitance is generated by the first counter portion 31A of the first internal electrode layer 31 and the second counter portion 32A of the second internal electrode layer 32 opposing each other with the dielectric layer 20 interposed therebetween. Therefore, the characteristics of the capacitor are exhibited between the first external electrode 40A to which the first internal electrode layers 31 are connected and the second external electrode 40B to which the second internal electrode layers 32 are connected.

As shown in FIGS. 2, 4A, and 4B, the first external electrode 40A includes a first base electrode layer 50A, a first organic layer 70A provided on the first base electrode layer 50A, and a first plated layer 60A provided on the first organic layer 70A. In addition, the second external electrode 40B includes a second base electrode layer 50B, a second organic layer 70B provided on the second base electrode layer 50B, and a second plated layer 60B provided on the second organic layer 70B.

The first base electrode layer 50A is provided on the first end surface LS1. The first base electrode layer 50A is connected to the first extension portion 31B of each of the plurality of first internal electrode layers 31 exposed at the first end surface LS1. In the present embodiment, the first base electrode layer 50A extends from the first end surface LS1 to a portion of the first main surface TS1 and to a portion of the second main surface TS2, and to a portion of the first lateral surface WS1 and to a portion of the second lateral surface WS2.

The second base electrode layer 50B is provided on the second end surface LS2. The second base electrode layer 50B is in contact with the second extension portion 32B of each of the plurality of second internal electrode layers 32 exposed at the second end surface LS2. In the present embodiment, the second base electrode layer 50B extends from the second end surface LS2 to a portion of the first main surface TS1 and to a portion of the second main surface TS2, and to a portion of the first lateral surface WS1 and to a portion of the second lateral surface WS2.

An area covered by the first base electrode layer 50A of the present embodiment on the first main surface TS1 and the second main surface TS2 of the multilayer body 10 is greater than an area covered by the second base electrode layer 50B on the first main surface TS1 and the second main surface TS2 of the multilayer body 10.

For example, as shown in FIGS. 1 and 2, the first dimension EL1 of the first base electrode layer 50A is greater than the second dimension EL2 of the second base electrode layer 50B. The first dimension EL1 refers to a dimension in the length direction L from the first end surface LS1 of the multilayer body 10 to a terminal end adjacent to the second end surface LS2 in the first base electrode layer 50A that extends from the first end surface LS1 of the multilayer body 10 to portions of the first main surface TS1 and the second main surface TS2. The second dimension EL2 refers to a dimension in the length direction L from the second end surface LS2 of the multilayer body 10 to a terminal end adjacent to the first end surface LS1 in the second base electrode layer 50B that extends from the second end surface LS2 of the multilayer body 10 to portions of the first main surface TS1 and the second main surface TS2.

When the first dimension EL1 is greater than the second dimension EL2, it is possible to obtain the advantageous effects of the present disclosure even when the first dimension EL1 is less than 1.1 times the second dimension, but the first dimension EL1 is preferably 1.1 times or more the second dimension EL2. This makes it possible to obtain the advantageous effects of the present disclosure more effectively. The first dimension EL1 is more preferably 1.3 times or more. In this case, it is possible to obtain the advantageous effects of the present disclosure even more effectively.

The first base electrode layer 50A and the second base electrode layer 50B include at least one selected from a fired layer, an electrically conductive resin layer, a thin film layer, and the like.

The first base electrode layer 50A and the second base electrode layer 50B of the present embodiment are fired layers. It is preferable that the fired layers each include both a metal component, and either a glass component or a ceramic component, or both the glass component and the ceramic component. The metal component includes, for example, at least one selected from Cu, Ni, Ag, Pd, Ag-Pd alloys, Au, and the like. The glass component includes, for example, at least one selected from B, Si, Ba, Mg, Al, Li, and the like. As the ceramic component, the same or substantially the same ceramic material as that of the dielectric layer 20 may be used, or a different ceramic material may be used. Ceramic components include, for example, at least one selected from BaTiO₃, CaTiO₃, (Ba, Ca)TiO₃, SrTiO₃, CaZrO₃, and the like. It is preferable that the main component metal of the first base electrode layer 50A and the main component metal of the second base electrode layer 50B are Cu.

Each of the fired layers is obtained by, for example, applying an electrically conductive paste including glass and metal to the multilayer body 10, and firing it. The fired layer can be obtained by simultaneously firing (cofiring) a multilayer chip before firing, which is a material of the multilayer body 10 having a plurality of internal electrodes and a plurality of dielectric layers, and an electrically conductive paste applied to the multilayer chip. Alternatively, the multilayer chip may be fired to obtain the multilayer body 10, following which an electrically conductive paste may be applied to the multilayer body 10 and the resulting product may be fired. In a case of the above formation method, it is preferable that the fired layer is formed by firing a ceramic material added instead of the glass component. In such a case, it is particularly preferable to use, as the ceramic material to be added, the same or substantially the same kind of ceramic material as the dielectric layer 20. The fired layer may include a plurality of layers.

The thickness of the first base electrode layer 50A located on the first end surface LS1 in the length direction L is preferably, for example, about 2 µm or more and about 220 µm or less in the middle of the first base electrode layer 50A in the height direction T and the width direction W.

The thickness of the second base electrode layer 50B located on the second end surface LS2 in the length direction L is preferably, for example, about 2 µm or more and about 220 µm or less in the middle of the second base electrode layer 50B in the height direction T and the width direction W.

When providing the first base electrode layer 50A to at least a portion of one of the first main surface TS1 or the second main surface TS2, the thickness in the height direction T of the first base electrode layer 50A provided at this portion is preferably about 4 µm or more and about 15 µm or less in the middle in the length direction L and the width direction W of the first base electrode layer 50A provided at this portion, for example.

When providing the first base electrode layer 50A to at least a portion of one of the first lateral surface WS1 or the second lateral surface WS2, the thickness in the width direction W of the first base electrode layer 50A provided at this portion is preferably about 4 µm or more and about 15 µm or less in the middle in the length direction L and the height direction T of the first base electrode layer 50A provided at this portion, for example.

When providing the second base electrode layer 50B to at least a portion of one of the first main surface TS1 or the second main surface TS2, the thickness in the height direction T of the second base electrode layer 50B provided at this portion is preferably about 4 µm or more and about 15 µm or less in the middle in the length direction L and the width direction W of the second base electrode layer 50B provided at this portion, for example.

When providing the second base electrode layer 50B to at least a portion of one of the first lateral surface WS1 or the second lateral surface WS2, the thickness in the width direction W of the second base electrode layer 50B provided at this portion is preferably about 4 µm or more and about 15 µm or less in the middle in the length direction L and the height direction T of the second base electrode layer 50B provided at this portion, for example.

The first base electrode layer 50A and the second base electrode layer 50B are not limited to fired layers. For example, the first base electrode layer 50A and the second base electrode layer 50B may be thin film layers. The thin film layers are formed by a thin film forming method such as a sputtering method or a vapor deposition method. The thin film layers are layers of 3 µm or more and 40 µm or less on which metal particles are deposited.

The first organic layer 70A covers the first base electrode layer 50A. Details of the first organic layer 70A will be described later.

The second organic layer 70B covers the second base electrode layer 50B. Details of the second organic layer 70B will be described later.

The first plated layer 60A covers the first organic layer 70A.

The second plated layer 60B covers the second organic layer 70B.

The first plated layer 60A and the second plated layer 60B may each include at least one selected from Cu, Ni, Sn, Ag, Pd, a Ag-Pd alloy, Au, and the like. The first plated layer 60A and the second plated layer 60B may each include a plurality of layers. The first plated layer 60A and the second plated layer 60B each preferably include a two-layer configuration including a Sn plated layer on a Ni plated layer.

In the present embodiment, the first plated layer 60A includes a first Ni plated layer 61A, and a first Sn plated layer 62A provided on the first Ni plated layer 61A.

In the present embodiment, the second plated layer 60B includes a second Ni plated layer 61B, and a second Sn plated layer 62B provided on the second Ni plated layer 61B.

The Ni plated layer prevents the first base electrode layer 50A and the second base electrode layer 50B from being eroded by solder when mounting the multilayer ceramic capacitor 1. Furthermore, the Sn plated layer improves the wettability of the solder when mounting the multilayer ceramic capacitor 1. This facilitates the mounting of the multilayer ceramic capacitor 1. The thickness of each of the first Ni plated layer 61A, the first Sn plated layer 62A, the second Ni plated layer 61B, and the second Sn plated layer 62B is preferably 2 µm or more and 15 µm or less.

The external electrode 40 of the present embodiment may include an electrically conductive resin layer including electrically conductive particles and a thermosetting resin, for example. The electrically conductive resin layer may cover the fired layer. When the electrically conductive resin layer covers the fired layer, the electrically conductive resin layer is provided between the fired layer and the organic layer 70 (the first organic layer 70A and the second organic layer 70B). The electrically conductive resin layer may completely cover the fired layer or may partially cover the fired layer.

The electrically conductive resin layer including a thermosetting resin is more flexible than an electrically conductive layer made of, for example, a plating film or a fired product of an electrically conductive paste. Therefore, even when an impact caused by physical shock or thermal cycling acts on the multilayer ceramic capacitor 1, the electrically conductive resin layer functions as a buffer layer. Therefore, the electrically conductive resin layer reduces or prevents the occurrence of cracking in the multilayer ceramic capacitor 1.

Metals of the electrically conductive particles may be, for example, Ag, Cu, Ni, Sn, Bi or alloys including them. The electrically conductive particle preferably includes Ag, for example. The electrically conductive particle is a metal powder of Ag, for example. Ag is suitable as an electrode material because of having the lowest resistivity among metals. In addition, since Ag is a noble metal, it is not likely to be oxidized, and the weatherability thereof is high. Therefore, the metal powder of Ag is suitable as the electrically conductive particle.

Furthermore, the electrically conductive particle may be a metal powder coated on the surface of the metal powder with Ag. When using particles coated with Ag on the surface of the metal powder, the metal powder is preferably Cu, Ni, Sn, Bi, or an alloy powder thereof. In order to make the metal of the base material inexpensive while maintaining the characteristics of Ag, it is preferable to use a metal powder coated with Ag.

Furthermore, the electrically conductive particle may be formed by subjecting Cu and Ni to an oxidation prevention treatment. Furthermore, the electrically conductive particle may be a metal powder coated with Sn, Ni, and Cu on the surface of the metal powder. When using particles coated with Sn, Ni, and Cu on the surface of the metal powder, the metal powder is preferably Ag, Cu, Ni, Sn, Bi, or an alloy powder thereof.

The shape of the electrically conductive particle is not particularly limited. For the electrically conductive particle, particles having shapes such as spherical shape and flat shape can be used. However, it is preferable to use a mixture of a spherical metal powder and a flat metal powder.

The electrically conductive particles included in the electrically conductive resin layer mainly maintain the conductivity of the electrically conductive resin layer. Specifically, by a plurality of electrically conductive particles being in contact with each other, an energization path is provided inside the electrically conductive resin layer.

The resin of the electrically conductive resin layer may include, for example, at least one selected from a variety of known thermosetting resins such as epoxy resin, phenolic resin, urethane resin, silicone resin, polyimide resin, and the like. Among those, epoxy resin is excellent in heat resistance, moisture resistance, adhesion, etc., and thus is one of the most preferable resins. Furthermore, it is preferable that the resin of the electrically conductive resin layer includes a curing agent together with a thermosetting resin. When epoxy resin is used as a base resin, the curing agent for the epoxy resin may be various known compounds such as phenols, amines, acid anhydrides, imidazoles, active esters, and amideimides.

The electrically conductive resin layer may include a plurality of layers. The thickest portion of the electrically conductive resin layer is preferably 10 µm or more and 200 µm or less.

Next, the organic layer 70 according to the present embodiment will be described with reference to FIGS. 2 to 5. The organic layer 70 according to the present embodiment includes a first organic layer 70A and a second organic layer 70B.

The first organic layer 70A is provided on the first base electrode layer 50A. The first plated layer 60A is provided on the first organic layer 70A. In addition, the first organic layer 70A may also be provided on a portion of the first main surface TS1 and a portion of the second main surface TS2, and a portion of the first lateral surface WS1 and a portion of the second lateral surface WS2. In the present embodiment, the first organic layer 70A extends toward substantially the middle in the length direction L of the first main surface TS1 and the second main surface TS2, and substantially the middle in the length direction L of the first lateral surface WS1 and the second lateral surface WS2.

The second organic layer 70B is provided on the second base electrode layer 50B. The second plated layer 60B is provided on the second organic layer 70B. In addition, the second organic layer 70B may also be provided on a portion of the first main surface TS1 and a portion of the second main surface TS2, and a portion of the first lateral surface WS1 and a portion of the second lateral surface WS2. In the present embodiment, the second organic layer 70B extends toward substantially the middle in the length direction L of the first main surface TS1 and the second main surface TS2, and substantially the middle in the length direction L of the first lateral surface WS1 and the second lateral surface WS2.

Therefore, the first organic layer 70A and the second organic layer 70B are integrally formed at substantially the middle in the length direction L of the first main surface TS1 and the second main surface TS2, and at substantially the middle in the length direction L of the first lateral surface WS1 and the second lateral surface WS2. In this manner, the first organic layer 70A and the second organic layer 70B according to the present embodiment are integrally formed so as to cover the entire portion of the surface of the multilayer body 10 that is exposed from the external electrodes 40.

The state of the base electrode layer 50 covered with the organic layer 70 will be described with reference to FIGS. 5A and 5B. FIG. 5A is an enlarged cross-sectional view of the portion shown by R1 in FIG. 2. FIG. 5B is an enlarged cross-sectional view of the portion shown by R2 in FIG. 2. The first organic layer 70A is formed between the first base electrode layer 50A provided on the dielectric layer 20 and the first Ni plated layer 61A, as shown in FIG. 5A. The second organic layer 70B is formed between the second base electrode layer 50B provided on the dielectric layer 20 and the second Ni plated layer 61B, as shown in FIG. 5B.

The surface of the first organic layer 70A is provided as a surface where a portion of the first base electrode layer 50A is exposed. That is, the first organic layer 70A includes a plurality of voids as shown in FIG. 5A. The surface of the second organic layer 70B is provided as a surface where a portion of the second base electrode layer 50B is exposed. That is, the second organic layer 70B includes a plurality of voids as shown in FIG. 5B.

Here, the atomic percentage of the main component metal of each of the first base electrode layers 50A on the surfaces of the first organic layers 70A provided adjacent to the first main surface TS1 and the second main surface TS2 is defined as a first atomic percentage MR1. The atomic percentage of the main component metal of each of the second base electrode layers 50B on the surfaces of the second organic layers 70B provided adjacent to the first main surface TS1 and the second main surface TS2 is defined as a second atomic percentage MR2. At this time, the first atomic percentage MR1 is greater than the second atomic percentage MR2.

The first atomic percentage MR1 is preferably greater than 0.6 atom% and 4.0 atom% or less, and the second atomic percentage MR2 is preferably smaller than the first atomic percentage MR1 and 0.6 atom% or more and less than 4.0 atom%. When the first atomic percentage MR1 and the second atomic percentage MR2 fall below 0.6 atom%, plating defects are likely to occur. When the first atomic percentage MR1 and the second atomic percentage MR2 exceed 4.0 atom%, it may be difficult to obtain a sufficient peeling promotion effect. By setting the first atomic percentage MR1 and the second atomic percentage MR2 within the above ranges, precipitation of plating of the plated layer provided on the base electrode layer is inhibited, and the bonding area between the base electrode layer and the plated layer can be reduced. This reduces the adhesion between the base electrode layer and the plated layer, thereby exhibiting an effect of promoting peeling between the base electrode layer and the plated layer.

The first atomic percentage MR1 is more preferably greater than the second atomic percentage MR2 and 1.0 atom% or more. This makes it possible to achieve the advantageous effects of the present disclosure more effectively. The second atomic percentage MR2 is preferably smaller than the first atomic percentage MR1 and 0.6 atom% or more and 2.6 atom% or less. This makes it possible to achieve the advantageous effects of the present disclosure more effectively.

The second atomic percentage MR2 is preferably half or less of the first atomic percentage MR1. This makes it possible to achieve the advantageous effects of the present disclosure more effectively.

The main component metal of the first base electrode layer 50A and the main component metal of the second base electrode layer 50B are preferably Cu as described above. However, the main component metal of the first base electrode layer 50A and the main component metal of the second base electrode layer 50B are not limited to Cu. For example, Ni, Ag, Pd, Ag-Pd alloy, or Au may be used.

The first organic layer 70A and the second organic layer 70B each include an organosilicon compound. This allows the first organic layer 70A and the second organic layer 70B to be reliably formed on the surfaces of the multilayer body 10, the base electrode layer 50, etc., thereby improving reliability.

However, the composition of each of the first organic layer 70A and the second organic layer 70B is not limited to this. For example, the first organic layer 70A and the second organic layer 70B may be a fatty acid coating. The fatty acid coating is a layer formed by scattering fatty acid on the surface of the base electrode layer. When applying a fatty acid coating functioning as the first organic layer 70A and the second organic layer 70B, fatty acid will be present at least on the surface of the base electrode layer. More specifically, fatty acid is present at least on the surface of the first base electrode layer 50A and on the surface of the second base electrode layer 50B. This allows the carboxyl group of the fatty acid to ionize and adhere to the base electrode layer by ionic bonding force, and at the adhesion portion, the deposition of plating of the plated layer provided on the base electrode layer is inhibited, thereby reducing the bonding area between the base electrode layer and the plated layer. Therefore, the adhesion strength between the base electrode layer and the plated layer decreases, which has the effect of promoting peeling between the base electrode layer and the plated layer formed thereon. Consequently, when an impact from dropping or thermal cycling shock acts on the multilayer ceramic capacitor, it is possible to stably peel between the base electrode layer and the plated layer to release stress. As a result, it is possible to suppress cracking in the multilayer body of the multilayer ceramic capacitor.

Preferably, the sum of the atomic percentages (atom%) of Si, C, N, and O on the surface of the first organic layer 70A is 90 atom% or more. Preferably, the sum of the atomic percentages (atom%) of Si, C, N, and O on the surface of the second organic layer 70B is 90 atom% or more.

The thickness of the first organic layer 70A is preferably 5 nm or more and 500 nm or less. More preferably, the thickness of the first organic layer 70A is 100 nm or more and 200 nm or less. The thickness of the second organic layer 70B is preferably 5 nm or more and 500 nm or less. More preferably, the thickness of the second organic layer 70B is 100 nm or more and 200 nm or less.

The basic configuration of the multilayer ceramic capacitor 1 according to the embodiment is described as above. When the dimension in the length direction of the multilayer ceramic capacitor 1 including the multilayer body 10 and the external electrodes 40 is defined as the L dimension, the L dimension is preferably 0.2 mm or more and 10 mm or less. Furthermore, when the dimension in the height direction of the multilayer ceramic capacitor 1 is defined as the T dimension, the T dimension is preferably 0.1 mm or more and 10 mm or less. Furthermore, when the dimension in the width direction of the multilayer ceramic capacitor 1 is defined as the W dimension, the W dimension is preferably 0.1 mm or more and 10 mm or less.

### <Atomic Percentage of Organic Layer Surface Component>

Next, a method of measuring the atomic percentage of organic layer surface components in the present embodiment will be described. First, only one of the external electrodes of the multilayer ceramic capacitor is mounted on a mounting substrate using solder, and the other external electrode is placed in a floating state. Next, the other external electrode in the floating state is pressed from the bottom in the height direction to cause peeling between the base electrode layer and the plated layer at the one external electrode mounted on the mounting substrate, thereby exposing the organic layer. Then, XPS analysis is performed on the multilayer ceramic capacitor 1 from which the plated layer has been peeled off. First, X-rays are irradiated onto the entire surface of the exposed organic layer. The acceleration voltage of the thermal electrons at this time is 15 kV. Next, after qualitative analysis of all elements is performed by wide scan, quantitative analysis of all elements is performed by narrow scan, and the existence ratio (atom%) of all elements on the surface of the organic layer can be calculated. In this embodiment, narrow scan spectra are calculated from elements detected from wide scan spectra, normalized so that the total of detected elements becomes 100 atom%, thereby performing XPS analysis. The existence ratio (atom%) is an atomic percentage indicating the proportion of atoms excluding hydrogen and helium.

This allows the atomic percentage of the main component metal of the first base electrode layer 50A on the surface of the first organic layer 70A provided adjacent to the first main surface TS1 and the second main surface TS2 to be calculated as the first atomic percentage MR1. Furthermore, the atomic percentage of the main component metal of the second base electrode layer 50B on the surface of the second organic layer 70B provided adjacent to the first main surface TS1 and the second main surface TS2 can be calculated as the second atomic percentage MR2. When the main component metal of the first base electrode layer 50A and the second base electrode layer 50B is Cu, Cu (atom%) is calculated as the first atomic percentage MR1 and the second atomic percentage MR2.

Here, the first atomic percentage MR1 of the present disclosure is calculated as an average value of the measured value on the surface of the first organic layer 70A provided adjacent to the first main surface TS1 and the measured value on the surface of the first organic layer 70A provided adjacent to the second main surface TS2. The second atomic percentage MR2 of the present disclosure is calculated as an average value of the measured value on the surface of the second organic layer 70B provided adjacent to the first main surface TS1 and the measured value on the surface of the second organic layer 70B provided adjacent to the second main surface TS2.

### <First Dimension EL1, Second Dimension EL2>

Next, a method of measuring the first dimension EL1 and the second dimension EL2 will be described. First, an LT cross-section at the center in the width direction W of the multilayer body 10 is exposed by polishing. Next, using the exposed LT cross-section as a measurement target, the first dimension EL1 and the second dimension EL2 are measured using a digital microscope. Here, the first dimension EL1 of the present disclosure is calculated as an average value of the measured value adjacent to the first main surface TS1 and the measured value adjacent to the second main surface TS2. The second dimension EL2 of the present disclosure is calculated as an average value of the measured value adjacent to the first main surface TS1 and the measured value adjacent to the second main surface TS2.

Next, a method of manufacturing the multilayer ceramic capacitor 1 of the present embodiment will be described. The method of manufacturing the multilayer ceramic capacitor 1 of the present embodiment is not limited as long as the above-described requirements are satisfied. However, a preferred manufacturing method includes the following steps. The details of each step will be described below.

A dielectric sheet for manufacturing the dielectric layer 20 and an electrically conductive paste for manufacturing the internal electrode layer 30 are prepared. Both the dielectric sheet for manufacturing the dielectric layer 20 and the electrically conductive paste for manufacturing the internal electrode layer 30 include a binder and a solvent. The binders and solvents may be known ones. The paste made of an electrically conductive material is, for example, a paste obtained by adding an organic binder and an organic solvent to metal powder.

An electrically conductive paste for manufacturing the internal electrode layer 30 is printed on the dielectric sheet by using a printing plate designed to have the shape of the internal electrode layer 30 of the present embodiment, for example, by screen printing or gravure printing. With such a configuration, a dielectric sheet having a pattern of the first internal electrode layer 31 provided thereon and a dielectric sheet having a pattern of the second internal electrode layer 32 provided thereon are prepared.

By laminating a predetermined number of dielectric sheets on which patterns of the internal electrode layers 30 are not printed, a portion functioning as the first main surface-side outer layer portion 12 adjacent to the first main surface TS1 is formed. On top of that, the dielectric sheets on which the pattern of the first internal electrode layer 31 is printed and the dielectric sheets on which the pattern of the second internal electrode layer 32 is printed are sequentially and alternately laminated to form a portion functioning as the inner layer portion 11. A predetermined number of dielectric sheets on which patterns of the internal electrode layers 30 are not printed are laminated on the portion functioning as the inner layer portion 11 to form a portion functioning as the second main surface-side outer layer portion 13 adjacent to the second main surface TS2. Thus, a multilayer sheet is obtained.

Next, the multilayer sheet is pressed in the laminating direction by a means such as hydrostatic pressing to prepare a multilayer block.

Next, the multilayer block is cut to a predetermined size and divided into individual pieces to obtain a plurality of multilayer chips. Thereafter, the multilayer chips may be polished by barrel polishing or the like to round the corner portions and the ridge portions.

Next, the multilayer chips are fired to obtain the multilayer body 10. The firing temperature at this time depends on the materials of the dielectric layer 20 and the internal electrode layer 30, but is preferably 900°C or higher and 1400°C or lower, for example.

The electrically conductive paste functioning as the base electrode layer 50 is applied to both end surfaces of the multilayer body 10. In the present embodiment, the base electrode layer 50 is a fired layer. The fired layer can be formed by applying an electrically conductive paste containing a glass component and a metal to the multilayer body 10 by a method such as dipping, and then performing firing treatment. The temperature of the firing treatment at this time is preferably 700°C or higher and 900°C or lower.

In the present embodiment, dipping is performed such that the first base electrode layer 50A is provided to extend from the first end surface LS1 to a portion of the first main surface TS1 and a portion of the second main surface TS2. Also, dipping is performed such that the second base electrode layer 50B is provided to extend from the second end surface LS2 to a portion of the first main surface TS1 and a portion of the second main surface TS2. At this time, dipping is performed such that the distance over which the first base electrode layer 50A is provided to extend is longer than the distance over which the second base electrode layer 50B is provided to extend, so that the first dimension EL1 is longer than the second dimension EL2. At this time, it is preferable that dipping is simultaneously performed such that the first base electrode layer 50A is provided to extend to a portion of the first lateral surface WS1 and a portion of the second lateral surface WS2. Furthermore, it is preferable that dipping is performed such that the second base electrode layer 50B is provided to extend to a portion of the first lateral surface WS1 and a portion of the second lateral surface WS2. In this case, by dipping both end portions of the multilayer body 10 in the electrically conductive paste, it is possible to simultaneously perform dipping on the first main surface TS1 and the second main surface TS2, as well as the first lateral surface WS1 and the second lateral surface WS2. This facilitates the dipping operation.

Furthermore, the multilayer chips before firing and the electrically conductive paste applied to the multilayer chip may be fired simultaneously. In such a case, the fired layer is preferably formed by firing a ceramic material added instead of the glass component. At this time, it is particularly preferable to use, as the ceramic material to be added, the same kind of ceramic material as the dielectric layer 20. In this case, an electrically conductive paste is applied to the multilayer chip before firing, and the multilayer chip and the electrically conductive paste applied to the multilayer chip are fired at the same time to form the multilayer body 10 in which the fired layer is formed.

Next, an organic layer is formed by sparsely coating an organic compound on the base electrode layer. As a method for forming an organic layer by sparsely coating an organic compound on the base electrode layer, the organic compound can be formed by diluting it with an organic solvent and applying it by spray coating. Specifically, for example, a solution is prepared by diluting a silane coupling agent with IPA (2-propanol). A multilayer body with the base electrode layer formed is placed into a barrel device, and the solution is spray-coated onto the multilayer body with the base electrode layer formed. Thereafter, the resultant product is taken out from the barrel device and spread on a filter paper, and the organic layer is cured by heat treatment in an oven at 100°C to 200°C for a predetermined time (30 minutes to 60 minutes).

In addition, after preparing a solution by diluting an organic compound with an organic solvent, it is also possible to form the organic layer by applying the solution to the multilayer body with the base electrode layer formed, and thermally curing it. Here, the method of applying the solution can be performed by dipping or other methods.

In the present embodiment, the first organic layer 70A and the second organic layer 70B are formed such that the coverage ratio of the second organic layer 70B provided adjacent to the first main surface TS1 and the second main surface TS2 is higher than the coverage ratio of the first organic layer 70A provided adjacent to the first main surface TS1 and the second main surface TS2. That is, the first organic layer 70A and the second organic layer 70B are formed such that the first atomic percentage MR1, which is the atomic percentage of the main component metal of the first base electrode layer 50A on the surface of the first organic layer 70A provided adjacent to the first main surface TS1 and the second main surface TS2, is greater than the second atomic percentage MR2, which is the atomic percentage of the main component metal of the second base electrode layer 50B on the surface of the second organic layer 70B provided adjacent to the first main surface TS1 and the second main surface TS2.

The target value of the atomic percentage of the main component metal of the base electrode layer on the surface of the organic layer and the thickness of the organic layer can be controlled by controlling the solution concentration, application method, application time, and temperature during application.

In the present embodiment, first, the same amount of organic layer is formed on the first base electrode layer 50A and the second base electrode layer 50B by the above-described spray coating and heat treatment. As a result, the first atomic percentage MR1, which is the atomic percentage of the main component metal of the first base electrode layer 50A on the surface of the first organic layer 70A provided adjacent to the first main surface TS1 and the second main surface TS2, becomes equal to the second atomic percentage MR2, which is the atomic percentage of the main component metal of the second base electrode layer 50B on the surface of the second organic layer 70B provided adjacent to the first main surface TS1 and the second main surface TS2. Thereafter, the second base electrode layer 50B is further dipped in a silane coupling agent solution, and heat treatment is performed. This additional dipping and heat treatment results in the second base electrode layer 50B having a higher coverage ratio by the organic layer than the first base electrode layer 50A. Therefore, the first external electrode 40A and the second external electrode 40B are formed in a state where the first atomic percentage MR1 is greater than the second atomic percentage MR2.

Thereafter, a plated layer is formed on the surface of the organic layer 70. In the present embodiment, the first plated layer 60A is formed on the surface of the first organic layer 70A. Also, the second plated layer 60B is formed on the surface of the second organic layer 70B. In the present embodiment, a Ni plated layer and a Sn plated layer are formed as the plated layer. When performing the plating process, either electrolytic plating or electroless plating may be adopted. However, electroless plating has a disadvantage in that a pretreatment with a catalyst or the like is necessary in order to improve the plating deposition rate, and thus the process is complicated. Therefore, normally, electrolytic plating is preferably adopted. The Ni plated layer and the Sn plated layer are sequentially formed, for example, by barrel plating.

When the electrically conductive resin layer is provided, the electrically conductive resin layer may cover the fired layer. When the electrically conductive resin layer is provided, an electrically conductive resin paste containing a thermosetting resin and a metal component is applied on the fired layer, and then heat treatment is performed at a temperature of 250°C to 550°C or higher. Thus, the thermosetting resin is thermally cured to form the electrically conductive resin layer. The atmosphere during the heat treatment is preferably an N₂ atmosphere. Furthermore, in order to prevent scattering of the resin and to prevent oxidation of various metal components, the oxygen concentration is preferably 100 ppm or less.

The multilayer ceramic capacitor 1 is manufactured by the manufacturing process described above.

The configuration of the multilayer ceramic capacitor 1 is not limited to the configurations shown in FIGS. 1 to 4B. For example, the multilayer ceramic capacitor 1 may include a two-portion configuration, a three-portion configuration, or a four-portion configuration as shown in FIGS. 6 to 8.

The multilayer ceramic capacitor 1 shown in FIG. 6 is a multilayer ceramic capacitor 1 including a two-portion configuration, and includes, as the internal electrode layers 30, floating internal electrode layers 35, in addition to the first internal electrode layers 33 and the second internal electrode layers 34. Each of the floating internal electrode layers 35 is not exposed at either of the first end surface LS1 and the second end surface LS2. The multilayer ceramic capacitor 1 shown in FIG. 7 is a multilayer ceramic capacitor 1 including a three-portion configuration that includes, as the floating internal electrode layers 35, first floating internal electrode layers 35A and second floating internal electrode layers 35B. The multilayer ceramic capacitor 1 shown in FIG. 8 is a multilayer ceramic capacitor 1 including a four-portion configuration that includes, as the floating internal electrode layers 35, first floating internal electrode layers 35A, second floating internal electrode layers 35B, and third floating internal electrode layers 35C. As described above, by providing the floating internal electrode layers 35 as the internal electrode layers 30, the multilayer ceramic capacitor 1 includes a configuration in which the counter electrode portions are divided into a plurality of portions. As a result, a plurality of capacitor components are provided between the internal electrode layers 30 which are opposed to each other, and these capacitor components are connected in series. Therefore, the voltage applied to each capacitor component becomes low, such that it is possible to increase the breakdown voltage of the multilayer ceramic capacitor 1. The multilayer ceramic capacitor 1 of the present embodiment may include a multi-portion configuration of four or more portions.

### <Second Embodiment>

In the multilayer ceramic capacitor 1 according to the above-described embodiment, the first organic layer 70A and the second organic layer 70B extend toward substantially the middle in the length direction L of the first main surface TS1 and the second main surface TS2, and toward substantially the middle in the length direction L of the first lateral surface WS1 and the second lateral surface WS2, and are integrally formed to cover the entire portion of the surface of the multilayer body 10 that is exposed from the external electrodes 40. However, the configurations of the first organic layer 70A and the second organic layer 70B are not limited thereto.

The following describes a multilayer ceramic capacitor 1 according to the second embodiment with reference to FIGS. 9 to 10B. FIG. 9 is a cross-sectional view corresponding to FIG. 2 in the second embodiment. FIG. 10A is a cross-sectional view corresponding to FIG. 4A in the second embodiment. FIG. 10B is a cross-sectional view corresponding to FIG. 4B in the second embodiment. The same names may be given to configurations that are the same as those in the first embodiment, and detailed explanations thereof may be omitted.

As shown in FIG. 1, the multilayer ceramic capacitor 1 according to the second embodiment has a substantially rectangular parallelepiped shape. The multilayer ceramic capacitor 1 includes a multilayer body 10 having a substantially rectangular parallelepiped shape, and a pair of external electrodes 40 provided at both end portions of the multilayer body 10 and spaced apart from each other.

As shown in FIGS. 1 and 9, the external electrodes 40 include a first external electrode 40A adjacent to the first end surface LS1 of the multilayer body 10 and a second external electrode 40B adjacent to the second end surface LS2 of the multilayer body 10.

As shown in FIGS. 9, 10A, and 10B, the first external electrode 40A includes a first base electrode layer 50A, a first organic layer 70bA provided on the first base electrode layer 50A, and a first plated layer 60A provided on the first organic layer 70bA. Furthermore, the second external electrode 40B includes a second base electrode layer 50B, a second organic layer 70bB provided on the second base electrode layer 50B, and a second plated layer 60B provided on the second organic layer 70bB.

The organic layer 70b according to the present embodiment includes a first organic layer 70bA and a second organic layer 70bB.

The first organic layer 70bA is provided on the first base electrode layer 50A. The first plated layer 60A is provided on the first organic layer 70bA. In addition, the first organic layer 70bA may also be provided on a portion of the first main surface TS1 and a portion of the second main surface TS2, and a portion of the first lateral surface WS1 and a portion of the second lateral surface WS2. In the present embodiment, the first organic layer 70bA extends to a portion of the first main surface TS1 and a portion of the second main surface TS2, and a portion of the first lateral surface WS1 and a portion of the second lateral surface WS2.

The second organic layer 70bB is provided on the second base electrode layer 50B. The second plated layer 60B is provided on the second organic layer 70bB. In addition, the second organic layer 70bB may also be provided on a portion of the first main surface TS1 and a portion of the second main surface TS2, and a portion of the first lateral surface WS1 and a portion of the second lateral surface WS2. In the present embodiment, the second organic layer 70bB extends to a portion of the first main surface TS1 and a portion of the second main surface TS2, and a portion of the first lateral surface WS1 and a portion of the second lateral surface WS2.

That is, in the multilayer ceramic capacitor 1 according to the present embodiment, there is a portion where no organic layer 70b exists between the first external electrode 40A and the second external electrode 40B. Therefore, in the present embodiment, the first organic layer 70bA and the second organic layer 70bB are not integrally formed, and a portion of the surface of the multilayer body 10 is exposed. Even in this case, since the organic layer is formed at the end portion of the base electrode layer of the external electrode, which becomes the starting point of cracks, it is possible to achieve the advantageous effect of crack suppression.

Furthermore, in the present embodiment, by making the first dimension EL1 adjacent to the first end surface LS1 greater than the second dimension EL2 adjacent to the second end surface LS2, it is possible to increase the deflection load applied to the second external electrode 40B adjacent to the second end surface LS2. In addition, by making the first atomic percentage MR1 adjacent to the first end surface LS1 greater than the second atomic percentage MR2 adjacent to the second end surface LS2, it is possible to reduce the adhesion force between the second base electrode layer 50B and the second plated layer 60B of the second external electrode 40B adjacent to the second end surface LS2, where a large deflection load is applied. Therefore, it is possible to preferentially promote separation between the second base electrode layer 50B and the second plated layer 60B of the second external electrode 40B adjacent to the second end surface LS2, such that it is possible to achieve the advantageous effect of crack suppression.

The multilayer ceramic capacitor 1 according to the first embodiment is of two-terminal type including two external electrodes, but is not limited thereto, and may be of multi-terminal type including a plurality of external electrodes.

In the embodiments described above, the multilayer ceramic capacitor in which the dielectric layers 20 made of dielectric ceramic is used as a ceramic layer is exemplified as the multilayer ceramic electronic component. However, the multilayer ceramic electronic component of the present disclosure is not limited thereto. For example, the ceramic electronic component of the present disclosure is also applicable to a piezoelectric component using piezoelectric ceramic as a ceramic layer, and various multilayer ceramic electronic components such as a thermistor using semiconductor ceramic as a ceramic layer. Examples of the piezoelectric ceramic include PZT (lead zirconate titanate) ceramic and the like. Examples of the semiconductor ceramic include spinel ceramic and the like.

The multilayer ceramic capacitor 1 according to the embodiments described above achieves the following advantageous effects.

The multilayer ceramic capacitor 1 according to an embodiment includes the multilayer body 10 including the plurality of dielectric layers 20 (ceramic layers 20) and the plurality of internal electrode layers 30 (internal conductor layers 30) alternately laminated, and including the first main surface TS1 and the second main surface TS2 opposed to each other in the height direction T, the first lateral surface WS1 and the second lateral surface WS2 opposed to each other in the width direction W orthogonal to the height direction T, and the first end surface LS1 and the second end surface LS2 opposed to each other in the length direction L orthogonal to the height direction T and the width direction W, and the external electrodes 40 connected to the plurality of internal electrode layers 30. The external electrodes 40 include the first external electrode 40A provided on the first end surface LS1 and the second external electrode 40B provided on the second end surface LS2. The first external electrode 40A includes the first base electrode layer 50A provided on the first end surface LS1, the first organic layer 70A provided on the first base electrode layer 50A, and the first plated layer 60A provided on the first organic layer 70A. The second external electrode 40B includes the second base electrode layer 50B provided on the second end surface LS2, the second organic layer 70B provided on the second base electrode layer 50B, and the second plated layer 60B provided on the second organic layer 70B. The first base electrode layer 50A is provided to extend from the first end surface LS1 to portions of the first main surface TS1 and the second main surface TS2, the second base electrode layer 50B is provided to extend from the second end surface LS2 to portions of the first main surface TS1 and the second main surface TS2. When a dimension in the length direction L from the first end surface LS1 of the multilayer body 10 to a terminal end adjacent to the second end surface LS2 of the first base electrode layer 50A that extends from the first end surface LS1 to the portion of the first main surface TS1 and the portion of the second main surface TS2 is defined as the first dimension EL1, and a dimension in the length direction L from the second end surface LS2 of the multilayer body 10 to a terminal end adjacent to the first end surface LS1 of the second base electrode layer 50B extending from the second end surface LS2 to the portion of the first main surface TS1 and the portion of the second main surface TS2 is defined as the second dimension EL2, the first dimension EL1 is greater than the second dimension EL2. A surface of the first organic layer 70A is formed as a surface with a portion of the first base electrode layer 50A exposed. A surface of the second organic layer 70B is formed as a surface with a portion of the second base electrode layer 50B exposed. When an atomic percentage of a main component metal of the first base electrode layer 50A on the surface of the first organic layer 70A provided adjacent to the first main surface TS1 and the second main surface TS2 is defined as the first atomic percentage MR1, and an atomic percentage of a main component metal of the second base electrode layer 50B on the surface of the second organic layer 70B provided adjacent to the first main surface TS1 and the second main surface TS2 is defined as the second atomic percentage MR2, the first atomic percentage MR1 is greater than the second atomic percentage MR2.

By making the first dimension EL1 adjacent to the first end surface LS1 greater than the second dimension EL2 adjacent to the second end surface LS2, it is possible to increase the deflection load applied to the second external electrode 40B adjacent to the second end surface LS2. In addition, by making the first atomic percentage MR1 adjacent to the first end surface LS1 greater than the second atomic percentage MR2 adjacent to the second end surface LS2, it is possible to reduce the adhesion force between the second base electrode layer 50B and the second plated layer 60B of the second external electrode 40B adjacent to the second end surface LS2 where a large deflection load is applied. Therefore, it is possible to preferentially promote separation between the second base electrode layer 50B and the second plated layer 60B of the second external electrode 40B adjacent to the second end surface LS2, and to provide a highly reliable multilayer ceramic electronic component capable of suppressing the occurrence of cracks in the multilayer body 10 of the multilayer ceramic electronic component.

In conventional multilayer ceramic capacitors, when excessive deflection load is applied, excessive separation occurs between the multilayer body and the external electrodes, and there is a risk that the multilayer ceramic capacitor may detach from the mounting substrate. According to the present embodiment, as described above, when substrate bending stress or thermal cycling shock acts on the multilayer ceramic electronic component, the first external electrode, which is one of the two external electrodes, maintains a bonded state to the mounting substrate, while separation between the base electrode layer and the plated layer of the second external electrode, which is the other external electrode, can be preferentially and stably generated. Therefore, it is possible to reliably release stress without the multilayer ceramic capacitor detaching from the mounting substrate, and it is also possible to suppress the occurrence of cracks in the multilayer body.

In the multilayer ceramic capacitor 1 according to an embodiment, the first atomic percentage MR1 is more than 0.6 atom% and 4.0 atom% or less, and the second atomic percentage MR2 is smaller than the first atomic percentage MR1 and 0.6 atom% or more and less than 4.0 atom%.

With such a configuration, it is possible to provide a highly reliable multilayer ceramic electronic component, while suppressing the occurrence of plating defects.

In the multilayer ceramic capacitor 1 according to the embodiment, the main component metal of the first base electrode layer 50A and the main component metal of the second base electrode layer 50B are Cu.

With such a configuration, it is possible to provide a highly reliable multilayer ceramic electronic component, while suppressing the diffusion of hydrogen into the internal dielectric layers during manufacturing, preventing deterioration of insulation resistance, and reducing manufacturing costs.

In the multilayer ceramic capacitor 1 according to the embodiment, the first organic layer 70A and the second organic layer 70B are organosilicon compounds.

With such a configuration, reliability is improved because the organic layers are reliably formed on the surfaces of the multilayer body and the base electrode layers of the external electrodes.

The present invention is not limited to the configurations of the above embodiments, and can be appropriately modified and applied without changing the gist of the present invention. It should be noted that the present invention also includes the combinations of two or more of the individual desirable configurations described in the above embodiments.

### EXPLANATION OF REFERENCE NUMERALS

1 multilayer ceramic capacitor (multilayer ceramic electronic component)
10 multilayer body
20 dielectric layer (ceramic layer)
30 internal electrode layer (internal conductive layer)
40 external electrode
40A first external electrode
40B second external electrode
50A first base electrode layer
50B second base electrode layer
60A first plated layer
60B second plated layer
70A first organic layer
70B second organic layer
EL1 first dimension
EL2 second dimension
L length direction
LS1 first end surface
LS2 second end surface
MR1 first atomic percentage
MR2 second atomic percentage
T height direction
TS1 first main surface
TS2 second main surface
W width direction
WS1 first lateral surface
WS2 second lateral surface

## Claims

1. A multilayer ceramic electronic component comprising:
a multilayer body including a plurality of ceramic layers and a plurality of internal conductive layers that are alternately laminated, and including a first main surface and a second main surface that are opposed to each other in a height direction, a first lateral surface and a second lateral surface that are opposed to each other in a width direction perpendicular to the height direction, and a first end surface and a second end surface that are opposed to each other in a length direction perpendicular to the height direction and the width direction; and
external electrodes connected to the plurality of internal conductive layers, wherein
the external electrodes include a first external electrode on the first end surface and a second external electrode on the second end surface,
the first external electrode includes a first base electrode layer on the first end surface, a first organic layer on the first base electrode layer, and a first plated layer on the first organic layer,
the second external electrode includes a second base electrode layer on the second end surface, a second organic layer on the second base electrode layer, and a second plated layer on the second organic layer,
the first base electrode layer extends from the first end surface to a portion of the first main surface and a portion of the second main surface,
the second base electrode layer extends from the second end surface to a portion of the first main surface and a portion of the second main surface,
when a dimension in the length direction from the first end surface of the multilayer body to a terminal end adjacent to the second end surface of the first base electrode layer that extends from the first end surface of the multilayer body to the portion of the first main surface and the portion of the second main surface is defined as a first dimension, and
a dimension in the length direction from the second end surface of the multilayer body to a terminal end adjacent to the first end surface of the second base electrode layer that extends from the second end surface of the multilayer body to the portion of the first main surface and the portion of the second main surface is defined as a second dimension,
the first dimension is greater than the second dimension,
a surface of the first organic layer is provided as a surface with a portion of the first base electrode layer exposed,
a surface of the second organic layer is provided as a surface with a portion of the second base electrode layer exposed,
when an atomic percentage of a main component metal of the first base electrode layer on the surface of the first organic layer provided adjacent to the first main surface and the second main surface is defined as a first atomic percentage, and
an atomic percentage of a main component metal of the second base electrode layer on the surface of the second organic layer provided adjacent to the first main surface and the second main surface is defined as a second atomic percentage,
the first atomic percentage is greater than the second atomic percentage.

2. The multilayer ceramic electronic component according to claim 1, wherein
the first atomic percentage is more than 0.6 atom% and 4.0 atom% or less, and
the second atomic percentage is less than the first atomic percentage and 0.6 atom% or more and less than 4.0 atom%.

3. The multilayer ceramic electronic component according to claim 1 or 2, wherein the main component metal of the first base electrode layer and the main component metal of the second base electrode layer are Cu.

4. The multilayer ceramic electronic component according to any one of claims 1 to 3, wherein the first organic layer and the second organic layer are organosilicon compounds.
